**Europäisches Patentamt**

**European Patent Office**

**Office européen des brevets**

(19)

(11) Veröffentlichungsnummer: **0 254 903 B1**

# EUROPÄISCHE PATENTSCHRIFT

(12)

(45) Veröffentlichungstag der Patentschrift: **02.05.91**

(51) Int. Cl.5: **G01B 7/03**

(21) Anmeldenummer: **87109572.5**

(22) Anmeldetag: **03.07.87**

(54) Koordinatenmessgerät mit einem Tastkopf vom schaltenden Typ.

(30) Priorität: **12.07.86 DE 3623614**

(43) Veröffentlichungstag der Anmeldung:
**03.02.88 Patentblatt 88/05**

(45) Bekanntmachung des Hinweises auf die
Patenterteilung:
**02.05.91 Patentblatt 91/18**

(84) Benannte Vertragsstaaten:
**CH DE FR GB IT LI**

(56) Entgegenhaltungen:
**WO-A-86/03829**
**CH-A- 561 897**
**DE-C- 2 347 633**
**US-A- 4 462 162**

(73) Patentinhaber: **Firma Carl Zeiss**

**W-7920 Heidenheim (Brenz)(DE)CH DE FR GB IT LI**

Patentinhaber: **CARL ZEISS-STIFTUNG HANDELND ALS CARL ZEISS**

**W-7920 Heidenheim (Brenz)(DE)GB**

(72) Erfinder: **Enderle, Eckhard**
**Hutsteinweg 6**
**W-7080 Aalen-Dewangen(DE)**
Erfinder: **Schepperle, Karl**
**Herschelweg 20**
**W-7082 Oberkochen(DE)**

## Beschreibung

Die Erfindung betrifft ein Koordinatenmeßgerät mit einem Tastkopf vom schaltenden Typ, der eine Lagerstelle mit einem elektrischen Schaltkontakt aufweist. Solche Tastköpfe sind beispielsweise in der DE-PS 23 47 633, der DE-OS 27 43 665 und der DE-PS 27 12 181 beschrieben. Bei den bekannten Tastköpfen vom schaltenden Typ ist die Lagerstelle, von der der Taststift beim Antastvorgang abhebt, meist ein aus Doppelkugeln gebildetes isostatisches Dreipunktlager, wobei die Kugeln jeder Lagerstelle in einen elektrischen Stromkreis geschaltet sind und Kontakte darstellen, die von einem elektrisch leitenden Gegenkörper am Taststift in dessen Ruhelage geschlossen werden. Dieser Schaltkontakt wird z.B. benötigt, um der Maschinensteuerung des Koordinatenmeßgerätes Triggerimpulse zur Speicherung der Längenmeßwerte im Moment des Antastens zu liefern. Außerdem meldet dieser Kontakt, ob der Taststift nach dem abgeschlossenen Antastvorgang wieder in das die kalibrierte Nullage der Tastkugel bestimmende Lager zurückgekehrt ist und der Tastkopf demzufolge für die nächste Messung bereit ist.

Es hat sich nun gezeigt, daß sich der Schaltkontakt mit einer Fehlerhäufigkeit von etwa einmal bei mehreren tausend Antastungen nach Beendigung eines Antastvorganges nicht wieder schließt. Dieser Fehler hat keine systematischen Ursachen sondern kommt dadurch zustande, daß der Taststift infolge mechanischer Restreibung in seinem Dreipunktlager nicht völlig exakt in die Nullage zurückkehrt. Nun ist diese Fehlerhäufigkeit zwar sehr klein, in bestimmten Betriebsarten des Koordinatenmeßgerätes hat dieser Fehler, das heißt ein offen bleibender Schaltkontakt nach einem Antastvorgang, jedoch schwerwiegende Folgen: Koordinatenmeßgeräte werden zunehmend im Serienmeßbetrieb eingesetzt und vermessen z.B. in einer mannlosen Nachtschicht ohne Betreuung durch Bedienpersonal CNC-gesteuert eine größere Anzahl auf dem Meßtisch aufgespannter oder kontinuierlich über ein Handhabungssystem zugeführter Werkstucke. Tritt in dieser Betriebsart der genannte Fehler auf, so bricht die Maschinensteuerung den CNC-Betrieb aus Sicherheitsgrunden ab und das Koordinatenmeßgerät bleibt bis zum Beginn der nachfolgenden Schicht, in der der Fehler festgestellt und manuell behoben werden kann, stillgesetzt. Es ist klar, daß derartige Unterbrechungen des Betriebsablaufes äußerst unerwünscht sind.

Der Erfindung liegt deshalb die Aufgabe zugrunde, das Schließen des Schaltkontaktes im Tastkopf eines gattungsgemäßen Koordinatenmeßgerätes auch im automatischen Betrieb zuverlässig sicherzustellen.

Diese Aufgabe wird durch die im Anspruch 1 angegebenen Maßnahmen gelöst.

Die Lösung einer ersten Alternative sieht u.a. vor, daß im Tastkopf oder an der Aufhängung des Tastkopfs eine Einrichtung zur Erzeugung eines mechanischen Stoßes vorgesehen und an das Steuermodul angeschlossen ist, wobei das Steuermodul die Einrichtung bei fehlerhaft offenem Schaltkontakt ansteuert.

Die Einrichtung zur Stoßerzeugung kann beispielsweise durch einen Elektromagneten, einen Motor mit Unwucht, elektrisch oder pneumatisch vorgespannte Federn oder einen piezoelektrischen Schwinger realisiert sein. In allen Fällen erfolgt das Schließen des Schaltkontaktes mit Hilfe eines zusätzlichen mechanischen Energiestoßes, der die Restreibung im Lager des Taststifts überwindet. Dieser Energiestoß wird beispielsweise von der Maschinensteuerung ausgelöst, wenn der Schaltkontakt eine vorgebbare Zeitspanne nach Beendigung des Antastvorganges nicht geschlossen ist.

Durch den Einsatz einer solchen Einrichtung läßt sich die Zuverlässigkeit von Koordinatenmeßgeräten im automatisch ablaufenden Serienbetrieb mit relativ geringem Aufwand wesentlich erhöhen. Besonders gering ist der zur Erzielung dieses Erfolgs nötige Aufwand bei Tastköpfen, die bereits mit einer z.B. in der EP -A2-128 464 beschriebenen elektromagnetischen Taststiftwechseleinrichtungversehen sind. Hier kann der Zugmagnet, der für das Spannen des auswechselbaren Taststifts vorgesehen ist und sowieso bereits in den Tastkopf eingebaut ist, dazu benutzt werden den mechanischen Energiestoß zu erzeugen.

Die Einrichtung zur Erzeugung des Energiestoßes muß aber keineswegs direkt in den Tastkopf eingebaut sein. Sie kann beispielsweise auch am Koordinatenmeßgerät in der Nähe der Aufhängung bzw. Halterung des Tastkopfs angebracht sein, da sich der mechanische Stoß über die Befestigungselemente ohne weiteres auf den Tastkopf überträgt. Die Tastkopfhalterung ist oft selbst als ausrückbares Lager ausgebildet um z.B. die Funktion eines Kollisionsschutzes für den Tastkopf zu erfullen. Da nach einer Kollision die Lage des Tastkopfes hochgenau reproduziert werden muß, um ein Nachkalibrieren der Taststiftkombination zu vermeiden, bietet sich hier die Möglichkeit die Einrichtung zur Erzeugung des mechanischen Stoßes auch nach einer Tastkopfkollision zu aktivieren, wodurch die Tastkopfhalterung durch einen Stoß bzw. mehrere Stöße in ihre exakte Nullage hinein "gerüttelt" wird.

Die Lösung gemäß Anspruch 8 besteht darin, daß die Maschinensteuerung des Koordinatenmeßgerätes ein Steuermodul enthält, welches bei fehlerhaft offenem Schaltkontakt den Meßablauf unterbricht und den Tastkopf zur zuletzt abgearbeiteten Abtastposition zuruck verfährt.

Durch diese Maßnahme wird der Taststift an der zuletzt eingenommenen Tastposition nochmals ausgelenkt. Aufgrund der sehr geringen Wahrscheinlichkeit eines erneuten Offenbleibens des Kontakts im Zuge dieses zweiten Abtastens wird auch durch diese Maßnahme der auftretende Fehler zuverlässig beseitigt. Der Vorteil dieser Lösung ist darin zu sehen, daß am Tastkopf selber oder seiner Aufhängung keine Änderungen vorgenommen werden müssen, und auch keine elektromagnetische Tasterwechsel vorrichtung nötig ist. Die erforderlichen Maßnahmen beschränken sich vielmehr auf einen Eingriff in die Steuerelektronik des Koordinantenmeßgerätes. Wenn bisher allein von einem Koordinatenmeßgerät die Rede war, so ist klar, daß sich die Erfindung auch auf eine Werkzeugmaschine bezieht, in deren Werkzeughalter anstelle des Bearbeitungswerkzeugs ein Tastkopf fur die sofortige Messung des Arbeitsergebnisses eingewechselt ist und die in dieser Ausrüstung als Meßgerät arbeitet.

Weitere Vorteile der Erfindung ergeben sich aus der nachfolgenden Beschreibung von Ausführungsbeispielen anhand der Figuren 1 bis 2 der Zeichnungen.

In Figur 1　ist ein Tastkopf vom schaltenden Typ mit Einrichtung zur Erzeugung eines mechanischen Stoßes im Schnitt entlang der Tasterlängsachse dargestellt.

Figur 2　ist eine Prinzipskizze (Blockschaltbild) der zur Steuerung der Einrichtung nötigen Komponenten.

Figur 3　ist eine Prinzipskizze eines anderen Ausführungsbeispiels.

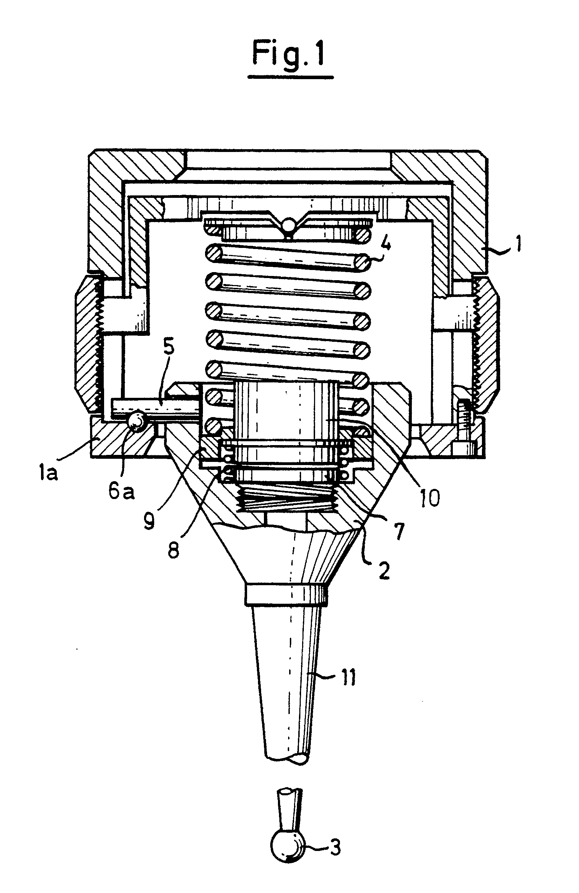

Der in Figur 1 dargestellte Tastkopf besitzt ein zylindrisches Gehäuse (1) mit einem ringformigen Bund (1a) an der Unterseite, der drei um 120° versetzte Kugelpaare trägt. Im Schnitt nach Figur 1 ist davon nur eine Kugel (6a) zu sehen. Die drei Kugelpaare bilden das Lager, in das der Taststiftträger (2) mit drei radialabstehenden Zylinderkörpern (5) von einer Feder (4) hineingedrängt wird. Der Taststift selbst ist mit (11) bezeichnet und trägt die Tastkugel (3). Die Feder (4) stützt sich über eine Druckplatte und eine Kugel an einem über den um das Gehäuse (1) gelegten Ring (15) axial verstellbaren Widerlager (14) ab. Mit Hilfe des Rings (15) läßt sich die Antastkraft für den Taststift (11) einstellen.

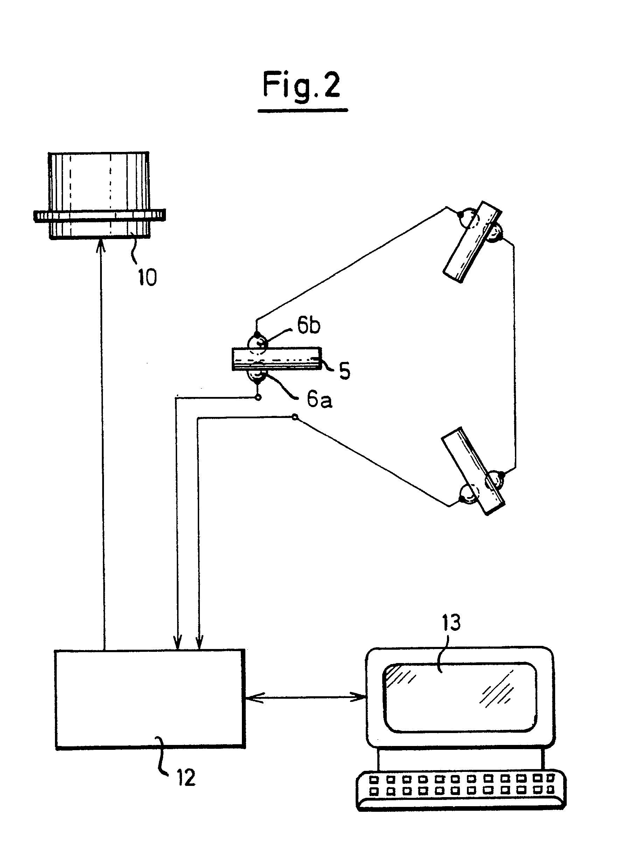

Wie aus Figur 2 ersichtlich ist sind die drei Paare von Lagerkugeln (6) elektrisch miteinander verbunden und bilden Kontakte, die von den Zylinderkörpern (5) am Taststiftträger (2) in der Ruhelage des Taststifts (11) geschlossen sind.

Außerdem ist in den Taststifthalter (2) eine weichmagnetische Platte (7) eingelassen und ih r gegenüber ein Elektromagnet (10) angeordnet, der von einer zweiten Feder (8) so gegen einen Anschlagring (9) gedrückt wird, daß ein kleiner Luftspalt zwischen dem Magnet (10) und dem Weicheisenkörper (7) entsteht.

Der aus den Lagerkugeln (6) gebildete Schaltkontakt und der Magnet (10) sind an ein in Firmware ausgeführtes Steuermodul (12) angeschlossen. Dieses Steuermodul (12) hat unter anderem die Aufgabe, dem Rechner (13) des Koordinatenmeßgerätes die beim Antastvorgang gemessenen Koordinaten zu übermitteln und Fehler wie z.B. offenbleibende Kontakte zu melden, und empfängt seinerseits vom Rechner (13) die Daten für das abzuarbeitende Meßprogramm.

Der im Steuermodul (12) vorhandene Mikroprozessor ist nun so programmiert, so daß er bei einem Ausbleiben des Schaltkontaktes über eine einstellbare Zeitspanne hinaus den Elektromagneten (10) kurzzeitig erregt. Der Magnet (10) schlägt dabei gegen den Weicheisenkörper (7) und erzeugt einen mechanischen Stoß, mit dessen Hilfe ein aufgrund von Lagerreibung offengebliebener Kontakt in dem aus den Kugeln (6) und Zylinderkörpern (5) gebildeten Schaltkreis geschlossen wird. Demzufolge ist der eingangs genannte Störfall beseitigt, es kommt nicht zu einer Fehlermeldung an dem Rechner (13) und der CNC-Betrieb läuft weiter.

In einem weiteren Ausführungsbeispiel ist ein z.B. mit der Taststiftwechseleinrichtung nach Figur 1 der eingangs genannten EP-A1-12 84 64 versehener Tastkopf vorhanden, wobei der dort ebenfalls mit (10) bezeichnete Elektromagnet an das Steuermodul (12) nach Figur 2 dieser Anmeldung angeschlossen ist. In dem bekannten Tastkopf diente der Elektromagnet (10) bisher dazu, bei einem Taststiftwechselvorgang durch Einschalten des Elektromagneten das Feld eines den Taststift haltenden Permanentmagneten zu neutralisieren, wodurch der Taststift freigegeben wurde.

Gemäß der vorliegenden Erfindung wird nun der Elektromagnet dazu benutzt, einen offengebliebenen Kontakt im Schaltlager des Tastkopfes zu schließen. Dazu liefert das Steuermodul (12) einen nur wenige Millisekunden währenden-Spannungsimpuls an den Elektromagneten, was ein Lösen des Taststifts zur Folge hätte. Nach Ablauf dieser kurzen Zeitspanne wird ein Impuls entgegengesetzter Polarität aufgeschaltet, der den Anker des Magneten wieder anzieht. Wegen seiner Massenträgheit ist der Taststift nur einige Mikrometer weit aus seinem Wechsellager gefallen. Durch die Erschütterung des erneuten Festspannens schließen jetzt die Kontakte im Schaltlager des Tastkopfes, so daß auch in diesem Falle die gemeldete Störung beseitigt ist.

Mit einer Einrichtung nach diesem Ausführungsbeispiel durchgeführte Tests wurden nach $10^6$ fehlerfreien Antastvorgängen abgebrochen, da kein offenbleibender Kontakt mehr festzustellen war.

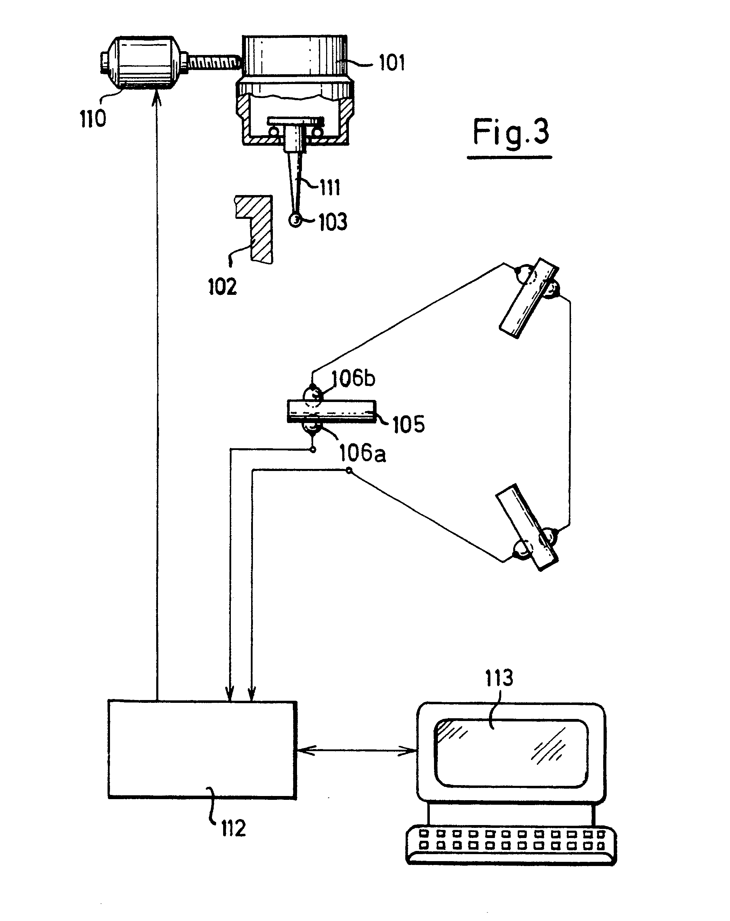

Im Ausführungsbeispiel nach Fig. 3 enthält die Maschinensteuerung des Koordinatenmeßgerätes ein an den Schaltkontakt 105/106 im Tastkopf 101 angeschlossenes Steuermodul 112, dessen Mikroprozessor so programmiert ist, daß er bei Ausbleiben des Schaltkontaktes das vom Rechner 113 übergebene Meßprogramm erst einmal unterbricht. Der Tastkopf 101 wird dann über die vom Modul 112 gesteuerten Antriebe 110 der Maschine zu der zuletzt abgearbeiteten Antastposition am Werkstück 102 zurückgefahren. Dabei findet ein nochmaliges Auslenken des Taststifts 111 statt, so daß beim erneuten Abtasten der Schaltkontakt mit sehr hoher Wahrscheinlichkeit schließt und der Fehler beseitigt ist.

**Ansprüche**

1.  Koordinatenmeßgerät mit einem Tastkopf vom schaltenden Typ, der eine Lagerstelle mit einem elektrischen Schaltkontakt aufweist, dadurch gekennzeichnet, daß die Maschinensteuerung des Koordinatenmeßgerätes ein Steuermodul (12; 112) enthält, das mit dem Schaltkontakt verbunden ist und bei fehlerhaft offenem Schaltkontakt (5/6; 105/106) eine nochmalige Auslenkung des Taststifts der Art veranlaßt, daß
    -   entweder im Tastkopf (1) oder an der Aufhängung des Tastkopfes eine Einrichtung (7 - 10) zur Erzeugung eines mechanischen Stoßes vorgesehen und an das Steuermodul angeschlossen ist, wobei das Steuermodul (12) die Einrichtung (7 - 10) bei fehlerhaft offenem Schaltkontakt ansteuert,
    -   oder aber das Steuermodul (112) so ausgebildet ist, daß es bei fehlerhaft offenem Schaltkontakt den Meßablauf unterbricht und den Tastkopf (101) zur zuletzt abgearbeiteten Abtastposition (102) zurück verfährt, so daß der Taststift in dieser Position durch das Abtasten nochmals ausgelenkt wird.

2.  Koordinatenmeßgerät nach Anspruch 1, dadurch gekennzeichnet, daß die Einrichtung einen Elektromagneten (10) enthält.

3.  Koordinatenmeßgerät nach Anspruch 2, dadurch gekennzeichnet, daß der Elektromagnet zur Erzeugung des Stoßes der gleichzeitig für das Spannen eines auswechselbaren Taststifts oder Tastkopfes vorgesehene Zugmagnet ist.

4.  Koordinatenmeßgerät nach Anspruch 1, dadurch gekennzeichnet, daß die Einrichtung einen Motor mit einer Umwucht enthält.

5.  Koordinatenmeßgerät nach Anspruch 1, dadurch gekennzeichnet, daß die Einrichtung eine elektrisch oder pneumatisch vorgespannte Feder enthält.

6.  Koordinatenmeßgerät nach Anspruch 1, dadurch gekennzeichnet, daß die Einrichtung einen piezoeletrischen Schwinger enthält.

**Claims**

1.  A coordinate measuring instrument having a probe of touch trigger type, which has a mounting place with an electric switch contact, characterized by the fact that the machine control of the coordinate measuring instrument comprises a control module (12; 112), which is connected to the switch contact (5/6; 105, 106) and causes a repeated deflection of the probe pin in a manner that
    -   either in the probe (1) itself or on its suspension a device (7-10) for generation of a mechanical shock is provided and connected to the control module, which control module triggers the device (7-10) upon an erroneously open switch contact,
    -   or that the control module (112) is so constructed as to stop the measuring process upon an erroneously open switch contact and moves the probe (101) back, so that the probe pin is deflected again.

2.  A coordinate measuring instrument according to Claim 1, characterized by the fact that the device contains an electromagnet (10).

3.  A coordinate measuring instrument according to claim 2, characterized by the fact that the electromagnet for producing the shock is the pull magnet which is provided at the same time for the clamping of a replaceable probe pin or probe.

4.  A coordinate measuring instrument according to Claim 1, characterized by the fact that the device contains an imbalance motor.

5.  A coordinate measuring instrument according to Claim 1, characterized by the fact that the device contains an electrically or pneumatically prestressed spring.

6. A coordinate measuring instrument according to Claim 1, characterized by the fact that the device contains a piezoelectric oscillator.

**Revendications**

1. Appareil de mesure de coordonnées comprenant un palpeur du type à commutation, qui présente un point d'appui avec un contact de commutation électrique, caractérisé en ce que la commande machine de l'appareil de mesure de coordonnées contient un module de commande (12; 112) qui est relié au contact de commutation et qui, lorsque le contact de commutation (5/6; 105/106) est ouvert par erreur, provoque une nouvelle déviation de la tige de palpage par

   - soit un dispositif (7 - 10) prévu dans le palpeur (1) ou sur la suspension du palpeur et destiné à produire un choc mécanique, dispositif qui est relié au module de commande (12), lequel actionne le dispositif (7 - 10) lorsque le contact de commutation est ouvert par erreur,
   - soit par le module de commande (112), réalisé à cet effet pour, lorsque le contact de commutation est ouvert par erreur, interrompre le déroulement de la mesure et ramener le palpeur (101) à la position de palpage (102) occupée et traitée en dernier, de sorte que la tige de palpage est déviée une nouvelle fois par le palpage à cette position.

2. Appareil de mesure de coordonnées selon la revendication 1, caractérisé en ce que le dispositif contient un électroaimant (10).

3. Appareil de mesure de coordonnées selon la revendication 2, caractérisé en ce que l'électroaimant pour produire le choc est un aimant d'attraction prévu en même temps pour la fixation d'une tige de palpage ou d'un palpeur interchangeable.

4. Appareil de mesure de coordonnées selon la revendication 1, caractérisé en ce que le dispositif contient un moteur avec un balourd.

5. Appareil de mesure de coordonnées selon la revendication 1, caractérisé en ce que le dispositif contient un ressort précontraint électriquement ou pneumatiquement.

6. Appareil de mesure de coordonnées selon la revendication 1, caractérisé en ce que le dispositif contient un oscillateur piézoélectrique.

# Fig.1

# Fig.2

Fig.3